# EUROPEAN PATENT APPLICATION

(11) **EP 2 251 814 A2**
(43) Date of publication of application: **17.11.2010**
(21) Application number: 10162790.9
(22) Date of filing: 13.05.2010
(51) Int. Cl.: G06F 21/22

(54) **License management system and license management method**

(30) Priority: 13.05.2009 JP 2009116745
(71) Applicant: Canon Kabushiki Kaisha, Tokyo 146-8501 (JP)
(72) Inventor: Hayami, Yoshikazu, Ohta-ku Tokyo (JP)
(74) Representative: Hitching, Peter Matthew

(57) **Abstract**

An information processing apparatus that acquires a license from a license server (601) and installs application software permitted by the license and executable by a virtual server (302, 402) that operates on the information processing apparatus determines a license type of the application software according to whether the license type is in a unit of the information processing apparatus unit or in a unit of the virtual server (302, 402), transmits the license type to the license server (601), and acquires a license to execute the application software from the license server (601).

## Description

### BACKGROUND OF THE INVENTION

### Field of the Invention

The present invention relates to a license management system, a license management method, and a computer program. More particularly, the present invention relates to a license management system, a license management method, and a computer program which are useful for performing license charge according to a nature of a virtual server.

### Description of the Related Art

Currently, due to the reasons described below, an increasing number of corporations have started to employ the idea of virtualization of servers. The greatest advantage of the virtualization is that a great number of "virtual servers" can be set up in one server and, accordingly, the processing capability of a central processing unit (CPU) can be used to the full.

The virtualization of servers is a technique to divide one server computer into a plurality of virtual computers and to make each virtual computer run different operating system (OS) or application software. A processor, a memory, and a hard disk are virtually divided into a plurality of domains. Each of the domains acts as if it is one processor, memory, or hard disk. Thus, different OSs or applications can be concurrently executed. By using this virtualization technique, time and effort necessary in managing physical resources is reduced compared to when a plurality of computers are physically used. The resources can be distributed more flexibly according to demand. However, due to the overhead associated with the virtualization, the performance is decreased compared to when one server computer is directly executed. Server integration, which integrates a great number of personal computer (PC) servers, takes full advantage of a processing power of a CPU.

The number of PC servers in corporations used for various applications, for example, from website building to basic business, is continuously growing. Resources of most of such PC servers are not effectively utilized. The average usage rate of a server is reported to remain at about 10 to 20%. This means that about 80 to 90% of the processing capability of a server remains unused. The usage rate is low because, in many cases, different servers are prepared for different applications and operations from the standpoint of operation stability and simplicity required in system management. When the number of servers is increased, management cost also increases. Additionally, costs concerning installation space, power consumption, and heat generation are also increased.

Under such circumstances, virtualization technique is attracting attention in recent years. By employing the virtualization technique, ten to twenty virtual servers can reside on one computer, and the number of servers can be dramatically reduced. Further, the use efficiency can be increased close to almost near 100% and operational cost can also be reduced.

The second reason is related to the progress in the development of multicore processors. According to the development of the multicore processors, parallel computing performance has been greatly enhanced. On the other hand, the development of software has not yet reached the level of the processors. In other words, since the structure of the conventional software is not optimized for multicore processors, the calculation resource of the processor with increased level of parallel computing cannot be used to the full.

In other words, even if a multicore processor is employed, the cores are not fully used and some cores remain idle. The virtualization technique of a server can be considered as an effective way to use the computation performance of a multicore processor to the maximum extent.

The third reason is related to the life of the system. If a business system, to which a user is accustomed, runs on an old OS such as Windows NT, it is natural that the user thinks of extending its life. Even if the user desires to use a new server instead of an old server with expired support, the old OS may not be supported. Since it takes time and effort in setting the business system to run on the latest OS, it is difficult to change the OS. If the virtualization technique is used in such a case, it is possible to run the old OS on a virtual server that resides on a new server.

The fourth reason is related to fault tolerance. If a failure related to software occurs with a server, the machine needs to be restarted. In order to promptly restart the machine, it is necessary to have a logically same server running so that the user can instantaneously exchange the servers. Such operation is easy if the user uses the move function of a server employing the virtualization technique.

The fifth reason is related to the capability of changing the processing capability of the CPU and the memory capacity according to the day and time. For example, an online server is generally busy in the morning or on Mondays while a batch server is often busy at nighttime or at weekends.

If the virtualization technique is used, the user can change the number of CPUs, the CPU power, and the memory capacity which are used by the virtual machines. The setting can be changed to meet various conditions such as the day of the week or the end of the month. Accordingly, the cost can be greatly reduced compared to when the system is constructed on physically different servers.

According to the background described above, the market of the virtual server is rapidly growing. There is a forecast that nearly 40% of x86 servers will be virtualized in 2011. Further, various types of virtualization software (VMWare, Hyper-V, Xen) are used today.

There are two types of server virtualization: host OS and hypervisor. The host OS does not use virtual hardware but uses an apparatus, such as an actual peripheral apparatus, as it is in such a manner that a plurality of guest OSs are executable on the host OS. The hypervisor sets virtualization software, which realizes virtualization, and software layer of virtual hardware, on hardware, and then installs a plurality of OSs.

Next, a common license charge method of virtual servers will be described. Generally, there are two license types regarding charging of software. One is based on the "number of users" and the other is based on the "number of CPUs (number of cores)" of a server. Regarding the license type based on the "number of users", even if the software is moved to a virtual server, the license cost is unchanged so long as the number of users is unchanged. Software which is used in network environment can be accessed by a large indefinite number of people. Thus, the computer which can be accessed or the number of computers which can be accessed by such people is often limited by a license.

Mainly, there are two types of software licenses: node-locked license and floating license. The node-locked license allows execution of software on only specific computers. The floating license allows execution of software on any computer on a network.

The floating license is discussed, for example, in Japanese Patent Application Laid-Open No. 2001-092550. The floating license is used for a system that allows mutual communication of a plurality of computers via a network. The node-locked license manages licenses by using host ID of each computer.

### SUMMARY OF THE INVENTION

The present invention is directed to a license management method that allows counting of a license which can be concurrently used in an environment where different charge methods (license types) exist or in an environment where the license dynamically changes with respect to a system including a virtual server.

The present invention in its first aspect provides an information processing apparatus as specified in claims 1 to 7.

The present invention in its second aspect provides a license management system as specified in claim 8.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Figs. 1A, 1B, and 1C illustrate configurations of a license management system, a license server, and a terminal apparatus according to an exemplary embodiment of the present invention.

Figs. 2A and 2B illustrate a virtualization system.

Fig. 3 illustrates a charge method of a virtual server.

Figs. 4A and 4B illustrate a move function of the virtual server.

Fig. 5 illustrates the virtual server in the terminal apparatus.

Fig. 6A and 6B illustrate information kept by a virtual environment license management module and the license server.

Fig. 7 is a flowchart illustrating processing performed when application is started on the virtual server.

Fig. 8 illustrates an overall configuration of the license management system when the move function of the virtual server is executed.

Fig. 9 is a flowchart illustrating processing performed when the move function is executed on the virtual server.

Fig. 10 is a flowchart illustrating processing performed when a number of assigned CPUs are changed.

Fig. 11 illustrates an overall configuration of a license management system including a real server and a virtual server.

Fig. 12A and 12B illustrate information which the virtual environment license management module keeps on the virtual server and the real server.

### DESCRIPTION OF THE EMBODIMENTS

Various exemplary embodiments, features, and aspects of the invention will be described in detail below with reference to the drawings.

The conventional floating license technique has been developed without considering a license charge system unique to virtualized machines including a virtual server. When the virtualization technique is used, the number of CPUs assigned to a virtual server at day can be changed from that assigned at night. If the charge system is based on the number of CPUs assigned to the virtual server, it is necessary to consider the assignment schedule of the CPUs.

The license charging, which has become complicated according to the techniques unique to virtualization, is in most cases performed according to the so-called gentleman's agreement between the software vendor and the user.

However, considering the rapid proliferation of the virtual servers, the necessity for an accurate general purpose license management method which can be used for various types of virtualization software is increasing. The burden in keeping track of the usage state of the license on the software vendor's side is also increasing. According to the present invention, both the software vendor and the user can manage the license.

Concrete numerical values, configurations, and operations in the description below can be changed accordingly.

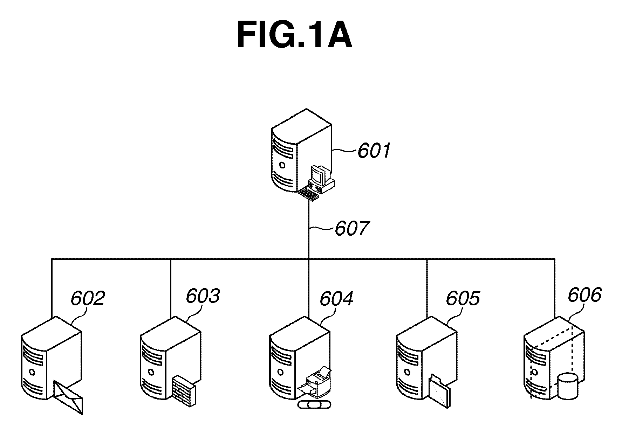

Fig. 1A illustrates an overall configuration of a license management system on a network according to a first exemplary embodiment of the present invention. As illustrated in Fig. 1A, the license management system, which operates on a network, includes terminal apparatuses 602 to 606, which are a user's apparatuses, and a license server 601. The terminal apparatuses 602 to 606 and the license server 601 are communicably connected via a network 607. The network 607 is, for example, a local area network (LAN).

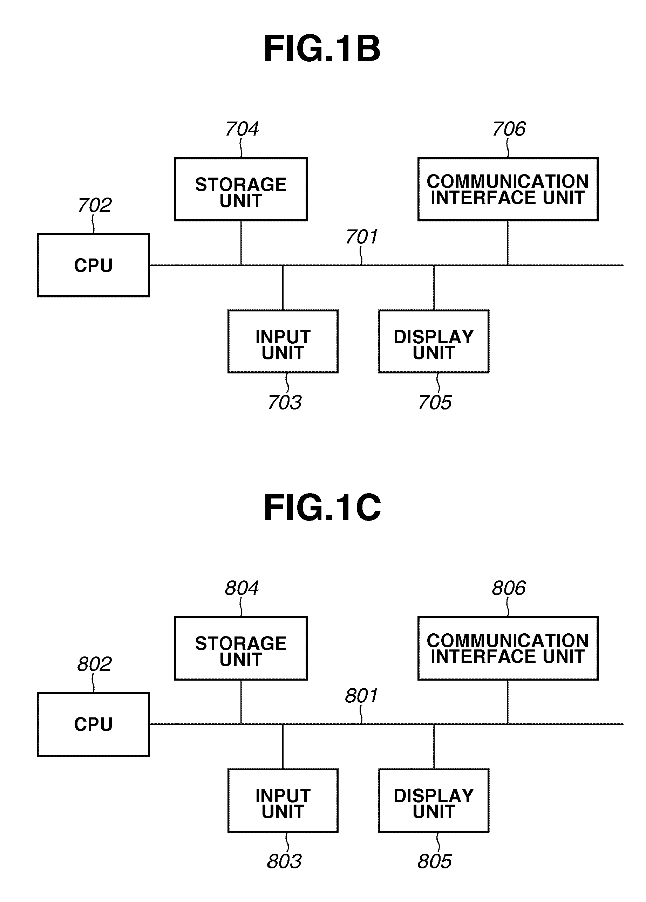

Fig. 1B illustrates a configuration of the license server 601 as an example of a license management apparatus.

As illustrated in Fig. 1B, the license server 601 includes a CPU 702 controlling the entire license server 601. The CPU 702 executes a program stored in a storage unit 704, processing of flowcharts related to the license server 601 described below.

An input apparatus 703 including a keyboard or a mouse, the storage unit 704, a display device 705, and a communication interface apparatus 706 are connected with the CPU 702 via a bus 701. The storage unit 704 is, for example, a read-only memory (ROM), a random access memory (RAM), a hard disk, or the like. The storage unit 704 stores information such as a type of application which can be used by the terminal apparatuses 602 to 606, a number of licenses for the application software, and the remaining number of licenses.

The display device 705 includes a cathode ray tube (CRT) display, a liquid crystal display (LCD), or the like. The communication interface apparatus 706 enables data exchange or signal exchange between the terminal apparatuses 602 to 606. The license server 601 issues a license that allows the terminal apparatuses 602 to 606 to use the application software. The terminal apparatuses 602 to 606 execute the application according to the license acquired from the license server 601.

Fig. 1C illustrates a configuration of the terminal apparatuses 602 to 606 as an example of the information processing apparatus. As illustrated in Fig. 1C, each of the terminal apparatuses 602 to 606 includes a CPU 802 that controls the entire terminal apparatus. The CPU 802 executes a program stored in a storage unit 804, for example, processing of flowcharts related to the terminal apparatus described below.

An input apparatus 803 including a keyboard or a mouse, the storage unit 804, a display device 805, and a communication interface apparatus 806 are connected to the CPU 802 via a bus 801. The storage unit 804 is, for example, a ROM, a RAM, a hard disk or the like.

The storage unit 804 stores an application component or a program used for adding operation function (plug-in) executed by each of the terminal apparatuses 602 to 606. The display device 805 includes a CRT, a LCD or the like. The communication interface apparatus 806 enables exchange of data or a signal with the license server 601.

Each of the terminal apparatuses 602 to 606 is termed a real server, a real machine, or a physical server. The virtual server described below operates on the terminal apparatuses 602 to 606. The CPU 802 is a multicore processor and each core can be processed independently. The number of cores being a processing unit of the multicore processor may also be termed a number of CPUs. Further, in place of the CPU 802 of a multicore processor, a plurality of single core processors (physically a plurality of CPU chips) may also be used.

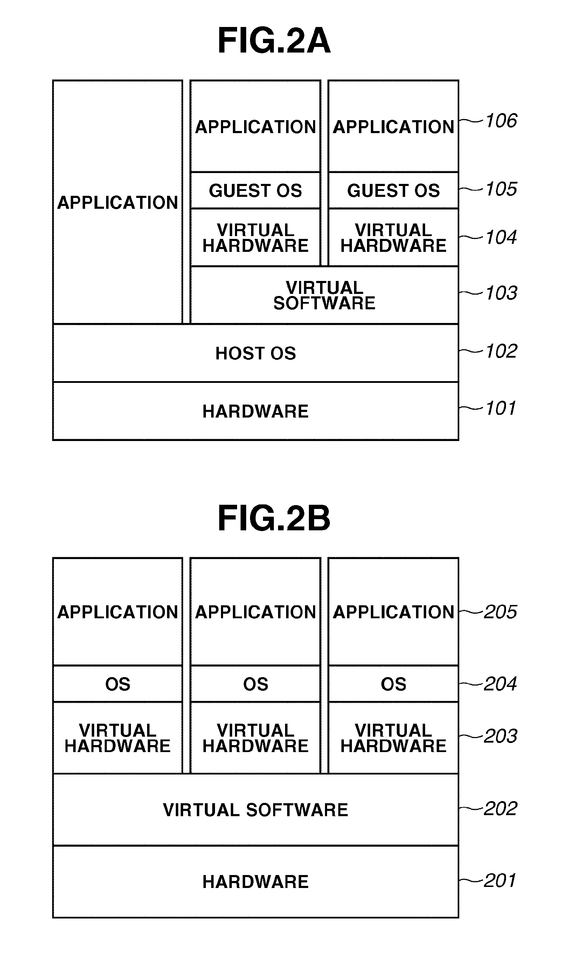

Now, the virtualization method of a server will be described. Typically, there are two system methods regarding server virtualization: host OS and hypervisor. Fig. 2 illustrates these two methods.

Fig. 2A illustrates the host OS system. Virtualization software 103 operates as middleware of a host OS 102. The virtualization software 103 creates virtual hardware 104 based on physical hardware so that an OS 105 or application 106 can run on the virtual hardware 104. An OS same as the host OS or a different OS can be used as a guest OS of the OS 105.

The host OS system uses a function of the host OS regarding input/output of hardware 101. The hardware 101 can use the terminal apparatuses 602 to 606. In this case, the virtual server corresponds to the portions of the virtual hardware 104, the OS (guest OS) 105, and the application 106, all of which run according to the virtual software 103. Since a full function OS exists between the virtual machine and the hardware 101, the overhead tends to be large. Products such as VMWare Server, Virtual Server, and Virtual PC are examples of the products of the host OS system.

Fig. 2B illustrates the hypervisor system. The hypervisor system is configured such that the virtualization layer used in the host OS system described above referring to Fig. 2A is directly set on physical hardware in place of the host OS.

The hypervisor can be considered as one type of OS. However, since the functions are focused on hardware management and virtual environment management, functions such as user interface and user command are omitted. Accordingly, the configuration is very small and simple. Products such as VMWare ESX, Xen Server, and Hyper-V are examples of the products of the hypervisor system. Virtualization software 202 runs on hardware 201.

The terminal apparatuses 602 to 606 can use the hardware 201. Virtual hardware 203 is created on the virtualization software 202, and an OS 204 and application 205 run on the virtual hardware 203. In this case, the virtual server corresponds to the portions of the virtual hardware 203, the OS 204, and the application 205.

Next, a common license charge method (license type) of a virtual server will be described.

As described above, generally, software is charged based on the "number of users" or the "number of CPUs (number of cores)" of a server. Even if the software is moved to a virtual server, the license cost according to the charge system based on the "number of users" remains unchanged unless the number of users is changed. However, if the software is moved to a virtual server when the cost is charged based on the "number of CPUs" or the "number of servers", the charge will be dependent on whether it is based on the "virtual server unit" or the "physical server unit".

Along with the proliferation of computer networking, the users can access distributed resources via a network. Many types of software are developed based on the premise that they are used in network environment. Thus, the user can use such software from any machine so long as it is on the network. Regarding the software used in such network environment, since a large indefinite number of people can access the software, the computer which can be accessed or the number of computers which can be accessed by such people is often limited by a license.

Mainly, there are two types of software licenses: node-locked license and floating license. The node-locked license allows execution of software on only specific computers. The floating license allows execution of software on any computer on a network.

The floating license system is used for a system including a plurality of computers which are communicably connected on a network. A license confirmation program is resident in a computer that operates as a server among such computers. When an application is started by a client, the application calls a license confirmation program of the server.

The license confirmation program checks the operation environment according to information sent from the application of the client. If the operation environment is appropriate, the license confirmation program permits the application of the client to operate. In other words, the license server issues a license to the client. When the client acquires the license issued by the license server, it executes the application.

Thus, in order to concurrently execute a same application program by a plurality of computers on a network according to the floating license system, a number of licenses same as the number of applications that are concurrently started is necessary.

According to the node-locked license system, the license is managed by using a host ID of each computer. There are no limitations in the user name or the number of users if the application is executed by using a host ID. In other words, the application is run exclusively on the computer registered in advance. In order to concurrently execute a same application by a plurality of computers in the node-locked system, a number of licenses same as the number of computers that execute the application is necessary.

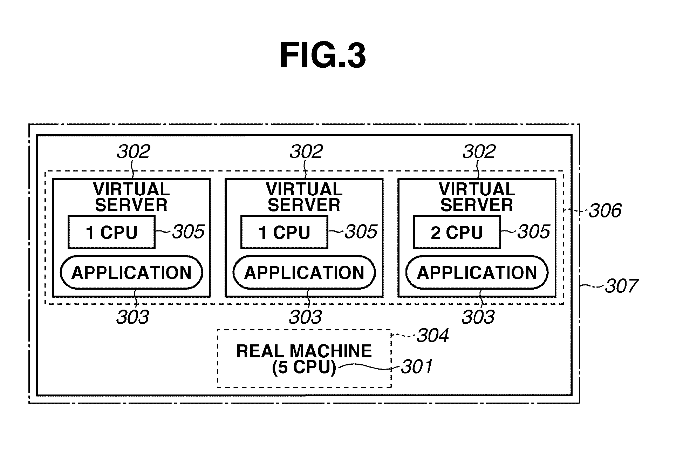

Next, the software license charge system generally used for the virtual server will be described. Fig. 3 illustrates a license type (charge method) for a virtual server.

If three virtual servers 302 are located in a server PC including five CPU 301 as illustrated in Fig. 3, and if application 303 is installed in each of the virtual servers 302, generally there is possibility for the following charge types.
1. Number of CPUs (number of cores) of the real machine five licenses (304)
2. Number of CPUs (number of cores) assigned to the virtual servers in which the application is installed → four licenses (305)
3. Number of virtual servers having the application installed → three licenses (306)
4. Number of CPUs (number of cores) of the real machine x number of virtual servers in which the application is installed fifteen licenses (307)

Currently, the charge method is not fixed. Due to this ambiguity, the license system is complicated and difficult to understand for the users.

Further, there is a function termed move function (VMotion of VMWare, LiveMigration of Xen) , which is a function unique to virtualization. If the move function is used, a virtual server operating on a certain server can be moved to a different server in an on-line state. For example, a backup server of a primary server can be used if failover occurs or a project is stopped. Generally, when the move function is used, the backup server is included in the calculation of the license charges.

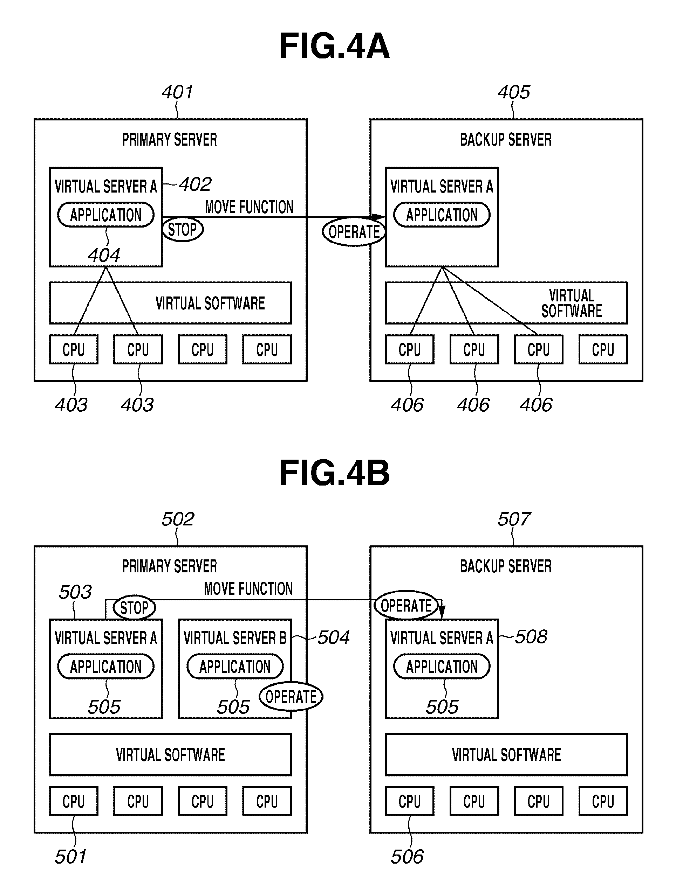

Fig. 4 illustrates a move function of the virtual server. As illustrated in Fig. 4A, if two CPU 403 are assigned to a virtual server A 402 located in a primary server 401, an application 404 is installed in the virtual server A 402, and the number of CPUs (CPU 406) assigned to a backup server 405 is three, then a maximum of three licenses are necessary based on the CPU.

When the application is charged by the physical server unit, in some cases a license will be necessary for a backup server as illustrated in Fig. 4B. According to the example in Fig. 4B, a plurality of virtual servers (a virtual server A 503, a virtual server B 504, etc.) are operated on a primary server 502 including four real CPU 501. Application 505 is installed in each of the virtual servers. If one of such virtual servers (e.g., virtual server A) moves to a backup server 507 having four real CPU 506, then a license for a virtual server A508, to which the virtual server A 503 has moved, will also be necessary. As a result, a total of eight licenses will be necessary (four real CPUs of the primary server 502 and four real CPUs of the backup server 507).

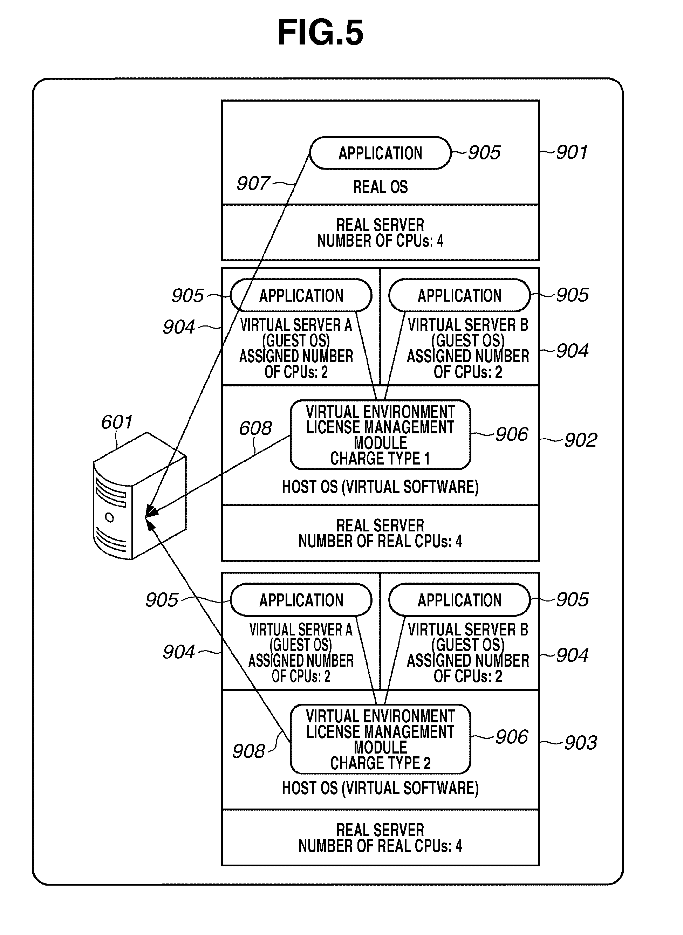

Fig. 5 illustrates a virtual server in each of the above-described terminal apparatuses 602 to 606.

The virtual server illustrated in Fig. 5 is based on the above-described host OS method. Each of the terminal apparatuses 602 to 606 includes a server 901 operated by the real server, as well as servers 902 and 903. Two virtual servers 904 are operated on each of the servers 902 and 903.

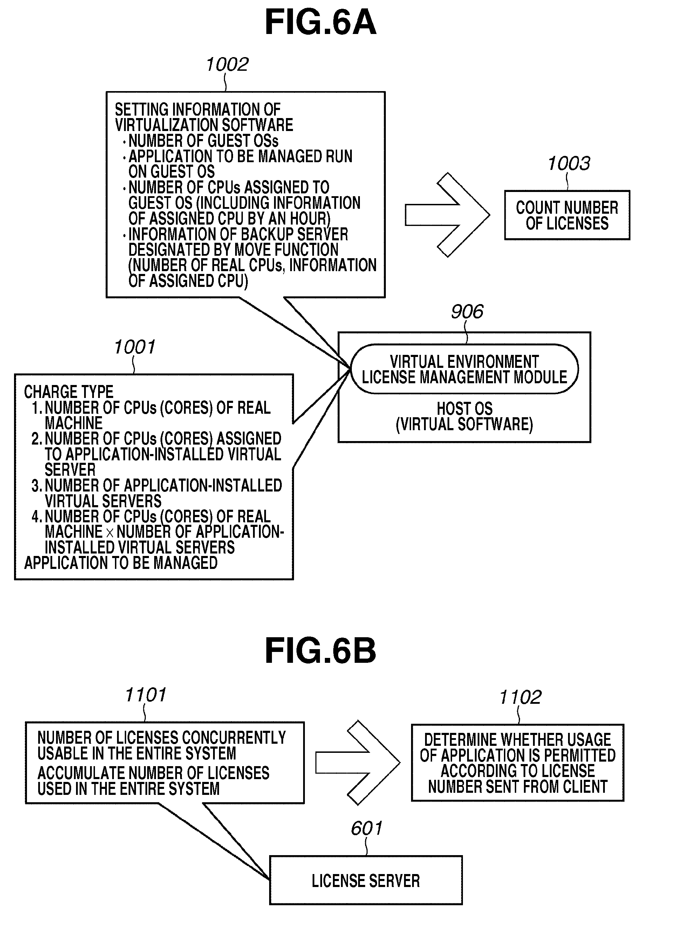

Application 905 is installed in the server 901 and each of the virtual servers 904. A virtual environment license management module 906 is set on each of the servers 902 and 903 including the virtual server 904. This module counts the number of licenses of the application running on all the virtual servers. Thus, the virtual environment license management module 906 includes information 1001 and 1002 illustrated in Fig. 6A.

According to the example illustrated in Fig. 5, the server 901 corresponds to the first information processing apparatus and the servers 902 and 903 correspond to the second information processing apparatus. Virtualization software is not operated on the server 901 but operated on the servers 902 and 903.

Regarding the server 901, the application 905 requests the license server 601 to send a license and acquires a license from the license server 601. This is the acquisition of the license based on the number of the server 901. Regarding the servers 902 and 903, the virtual environment license management module 906 counts the number of licenses based on the number of the virtual server 904, requests the license server 601 to send a number of licenses that is equal to the obtained number, and acquires the licenses. The virtual environment license management module 906 may also count the number of licenses when the application is running on the virtual server 904.

Fig. 6 illustrates information kept by the virtual environment license management module and the license server.

Information 1001 is set in advance in the virtual environment license management module. The information 1001 includes information about a license charge type of the application managed in the virtual environment and application information managed by the virtual environment license management module. The charge type of different servers, such as the server 902 and the server 903, may be different.

Information 1002 is setting information of the virtualization software. Information such as the number of actual CPUs, the number of virtual servers, the number of CPUs assigned to each virtual server, and presence or absence of a backup server is included in the information 1002. The license count can be calculated using such information (1003). Regarding an application installed in a real server, such as the server 901, which does not have an virtual server, the application itself sends license count information to the license server that counts the number of licenses of the entire system and inquires whether the license can be used (907 in Fig. 5).

Similarly, the virtual environment license management module counts the number of licenses for the servers that operates virtual servers such as the servers 902 and 903, sends the license count information to the license server that counts the number of licenses of the entire system, and inquires whether the license can be used (908 in Fig. 5).

Fig. 6B illustrates the information kept by the license server. The license server has information 1101 which is information of the number of licenses that can be concurrently used in the entire system. Further, the license server has information of the number of licenses that are currently used. If an inquiry is sent from the application or the virtual environment license management module to the license server asking whether the license can be used, the license server updates the number of the licenses that is currently used according to the license count information that it has received. Then, the license server compares the number of the licenses currently used and the number of the concurrently usable licenses that is set in advance, determines whether the license can be used (1102), and returns the result to the application or the virtual environment license management module.

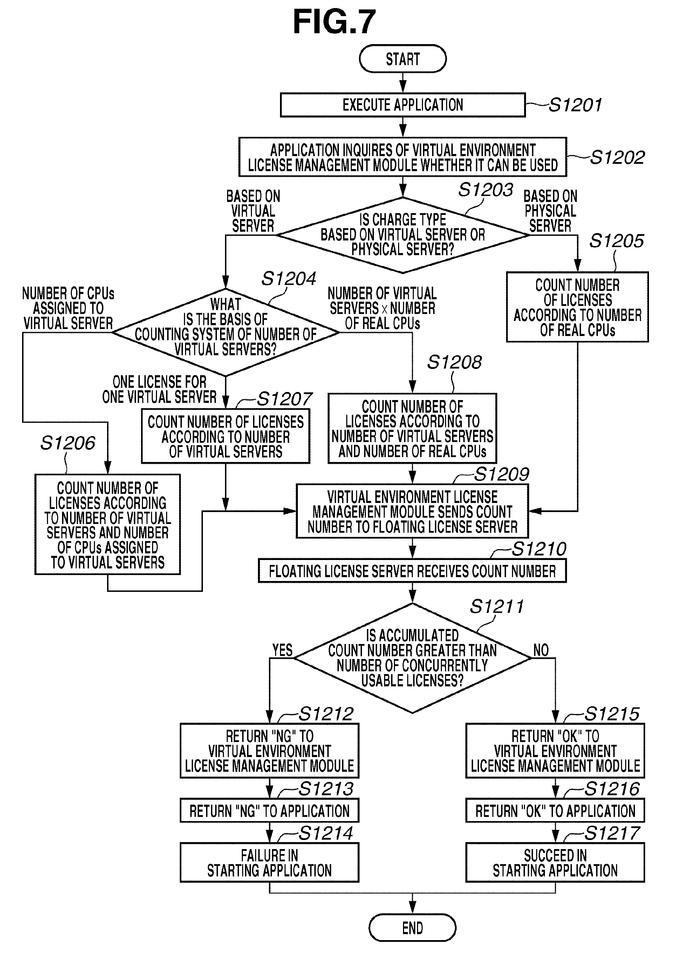

Fig. 7 is a flowchart of the processing performed on the virtual server when the application is executed.

In step S1201, the application is executed. In step S1202, the application inquires the virtual environment license management module whether the license can be used. On receiving this inquiry, the virtual environment license management module counts the number of licenses according to the charge type. The method for counting the number of licenses performed by the virtual environment license management module according to the charge type will be described in detail.

In step S1203, the charge type is determined. If the license is counted based on the virtual servers, the processing proceeds to step S1204. In step S1204, the counting system is determined. If the number of the licenses equals the number of the CPUs assigned to the virtual servers having the application installed, the processing proceeds to step S1206. In step S1206, the number of the licenses is counted according to the number of the virtual servers and the number of the CPUs assigned to the virtual servers. In step S1204, if one license is assigned to each virtual server, the processing proceeds to step S1207. In step S1207, the number of the licenses is acquired from the number of the virtual servers. In step S1204, if the number of the licenses is acquired by multiplying the number of the virtual servers by the actual number of CPUs, the processing proceeds to step S1208. In step S1208, the number of the licenses is acquired by multiplying the number of the virtual servers by the actual number of CPUs.

In step S1203, if the license is counted based on the physical servers, the processing proceeds to step S1205. In step S1205, the number of the licenses is counted according to the number of the actual CPUs. In step S1209, the virtual environment license management module transmits the counted license number to the license server.

In step S1210, the license server receives the number of the licenses and updates the number of the currently-used licenses. In step S1211, if there is an upper limit of the number of the licenses that can be concurrently used, the license server determines whether the accumulated number of the licenses is greater than the upper limit of the concurrently usable licenses. If the accumulated number of the licenses is greater than the upper limit of the concurrently usable licenses (YES in step S1211), the processing proceeds to step S1212. In step S1212, the result of the determination obtained in step S1211 is returned to the virtual environment license management module. In step S1213, information that the application cannot be used is returned to the application. In step S1214, the start of the application fails. On the other hand, in step S1211, if the accumulated number of the licenses is not greater than the upper limit of the concurrently usable licenses (NO in step S1211), then the processing proceeds to step S1215. In step S1215, the result of the determination obtained in step S1211 is returned to the virtual environment license management module. In step S1216, information that the application can be used is returned to the application. In step S1217, the application is started.

According to the present embodiment, license management can be performed by a floating license server in a network system including a virtual server. Although a host OS virtual server is described in the present embodiment, the above described method is similarly applicable to a hypervisor-based virtual server.

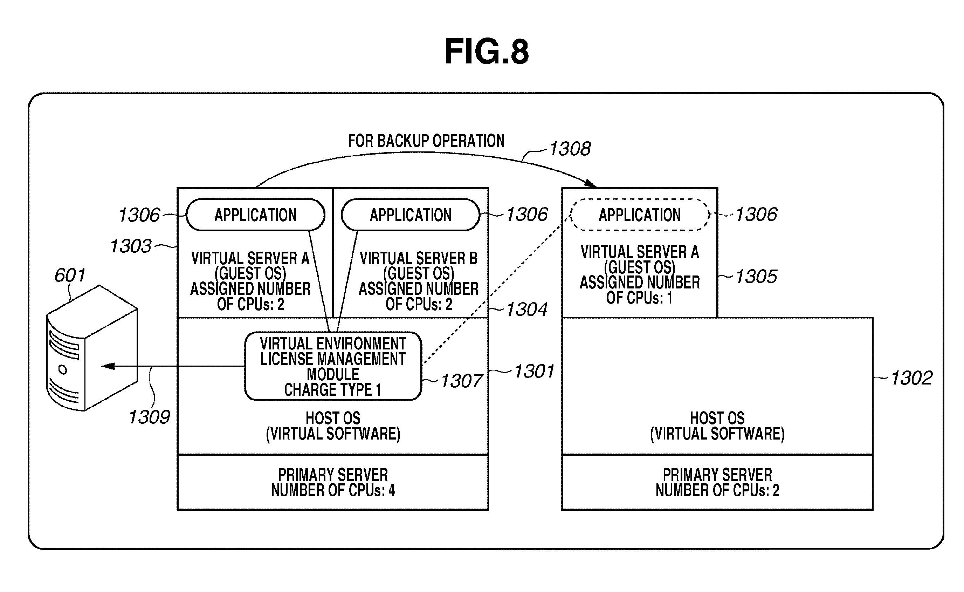

Fig. 8 illustrates a license management system of a network including a virtual server (host OS) for backup server operation using move function of the virtual server.

According to a license management system of a second exemplary embodiment, the entire network is managed by the license server 601. Virtual servers 1303 and 1304 are operated on a primary server 1301. A backup server 1302 serves as a backup. Application 1306 is installed in each of the virtual servers 1303 and 1304.

A virtual environment license management module 1307 is set on the primary server 1301 including the virtual servers 1303 and 1304. If the virtual server 1303 is moved to the backup server 1302 (1308), since the number of the licenses may be changed, the virtual environment license management module 1307 counts again the number of licenses of the application it manages.

The virtual environment license management module 1307 counts the number of the licenses of the applications running on all the virtual servers. The virtual environment license management module 1307 sends the license count information to the license server that counts the number of the licenses of the entire system, and inquires whether the application can be used (1309).

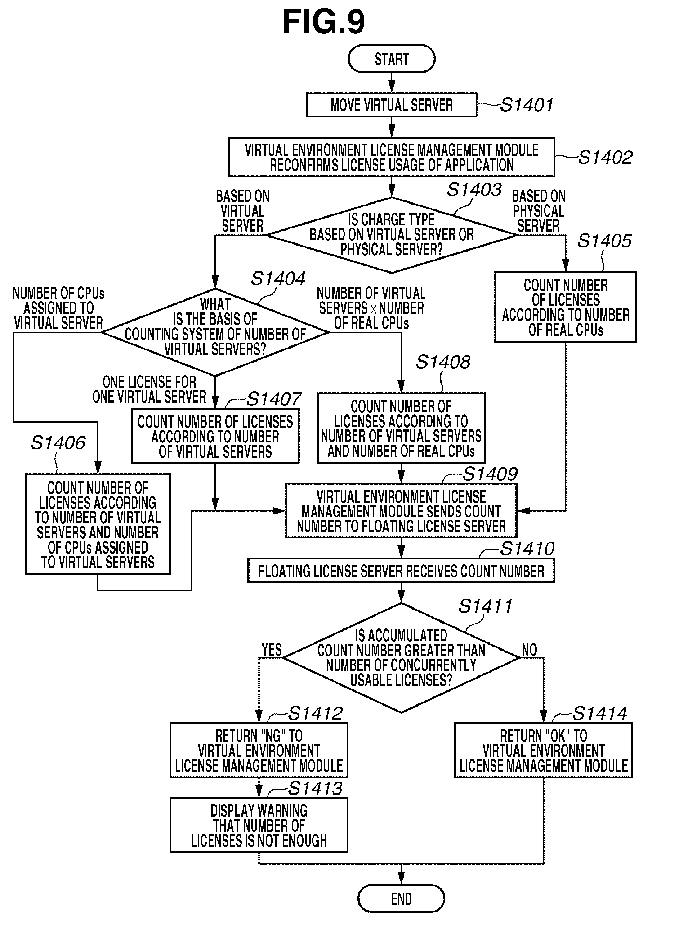

Fig. 9 is a flowchart illustrating processing performed when the move function of the virtual server is used.

In step S1401, the virtual server is moved. In step S1402, the virtual environment license management module reconfirms the license usage state of the application it manages and counts the number of licenses according to the charge type. The method for counting the number of licenses performed by the virtual environment license management module according to the charge type will be described in detail.

In step S1403, the charge type is determined. If the license is counted based on the virtual servers, the processing proceeds to step S1404. In step S1404, the counting system is determined. If the number of the licenses is equal to the number of the CPUs assigned to the virtual servers having the application installed, the processing proceeds to step S1406. In step S1406, the number of the licenses is counted according to the number of the virtual servers and the number of the CPUs assigned to the virtual servers. In step S1404, if one license is assigned to each virtual server, the processing proceeds to step S1407. In step S1407, the number of the licenses is acquired from the number of the virtual servers. In step S1404, if the number of the licenses is acquired by multiplying the number of the virtual servers by the actual number of CPUs, the processing proceeds to step S1408. In step S1408, the number of the licenses is acquired by multiplying the number of the virtual servers by the number of the assigned CPUs.

In step S1403, if the license is counted based on the physical servers, the processing proceeds to step S1405. In step S1405, the number of the licenses is counted according to the number of the actual CPUs. In step S1409, the virtual environment license management module transmits the counted number of licenses to the license server.

In step S1410, the license server receives the number of the licenses and updates the number of the currently-used licenses. In step S1411, if there is an upper limit of the number of the licenses that can be concurrently used, the license server determines whether the accumulated number of the licenses is greater than the upper limit of the concurrently usable licenses. If the accumulated number of the licenses is greater than the upper limit of the concurrently usable licenses (YES in step S1411), the processing proceeds to step S1412. In step S1412, the result of the determination obtained in step S1411 is returned to the virtual environment license management module and the virtual server is moved. In step S1413, a warning that the number of the licenses is not enough as a result of the move is displayed. On the other hand, in step S1411, if the accumulated number of the licenses is not greater than the upper limit of the concurrently usable licenses (NO in step S1411), then the processing proceeds to step S1414. In step S1414, the result of the determination obtained in step S1411 is returned to the virtual environment license management module.

According to the present embodiment, the license management can be performed even if the virtual server is moved.

The number of the licenses may be changed when a number of assigned CPUs is changed by the assignment function based on time allocation of the CPUs.

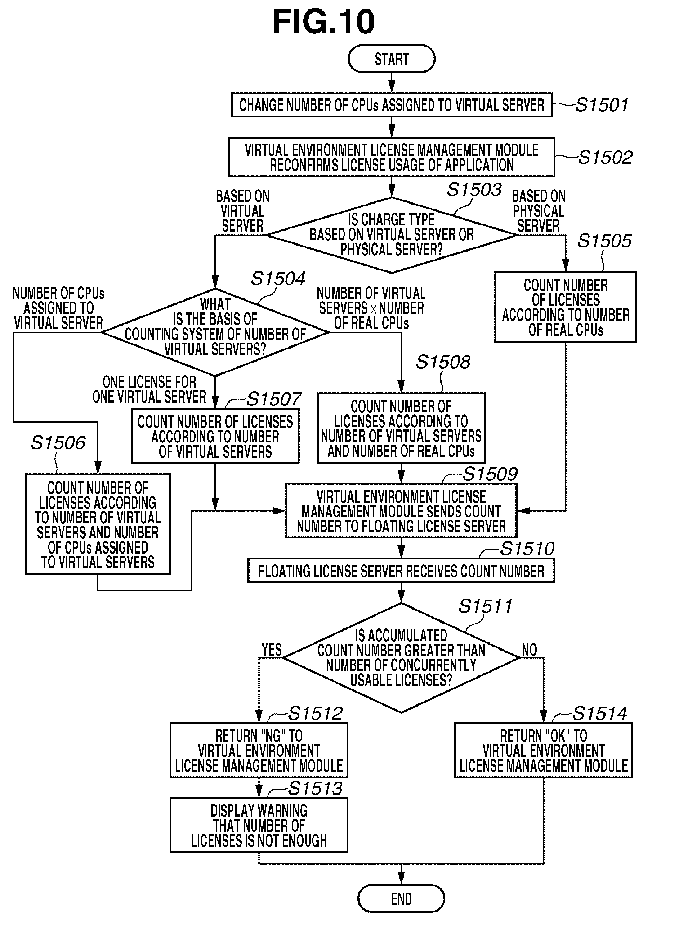

A third exemplary embodiment will now be described. Fig. 10 is a flowchart illustrating processing performed when a number of CPUs assigned to the virtual server is changed.

In step S1501, the number of CPUs assigned to the virtual server is changed. In step S1502, the virtual environment license management module reconfirms the license usage state of the application it manages and counts the number of licenses according to the charge type. The method for counting the number of licenses performed by the virtual environment license management module according to the charge type will be described in detail.

In step S1503, the charge type is determined. If the license is counted based on the virtual servers, the processing proceeds to step S1504. In step S1504, the counting system is determined. If the number of the licenses is equal to the number of the CPUs assigned to the virtual servers having the application installed, the processing proceeds to step S1506. In step S1506, the number of the licenses is counted according to the number of the virtual servers and the number of the CPUs assigned to the virtual servers. In step S1504, if one license is assigned to each virtual server, the processing proceeds to step S1507. In step S1507, the number of the licenses is acquired from the number of the virtual servers. In step S1504, if the number of the licenses is acquired by multiplying the number of the virtual servers by the actual number of CPUs, the processing proceeds to step S1508. In step S1508, the number of the licenses is acquired by multiplying the number of the virtual servers by the actual number of CPUs.

In step S1503, if the license is counted based on the physical servers, the processing proceeds to step S1505. In step S1505, the number of the licenses is counted according to the number of the actual CPUs. In step S1509, the virtual environment license management module transmits the counted number of licenses to the license server.

In step S1510, the license server receives the license number and updates the number of the currently-used licenses. In step S1511, if there is an upper limit of the number of the licenses that can be concurrently used, the license server determines whether the accumulated number of the licenses is greater than the upper limit of the concurrently usable licenses. If the accumulated number of the licenses is greater than the upper limit of the concurrently usable licenses (YES in step S1511), the processing proceeds to step S1512. In step S1512, the result of the determination obtained in step S1511 is returned to the virtual environment license management module and the number of assigned CPUs is changed. In step S1513, a warning that the number of the licenses is not enough as a result of the change is displayed. On the other hand, in step S1511, if the accumulated number of the licenses is not greater than the upper limit of the concurrently usable licenses (NO in step S1511), then the processing proceeds to step S1514. In step S1514, the result of the determination obtained in step S1511 is returned to the virtual environment license management module.

According to the present embodiment, the license management can be performed even if the number of CPUs assigned to the virtual server is changed.

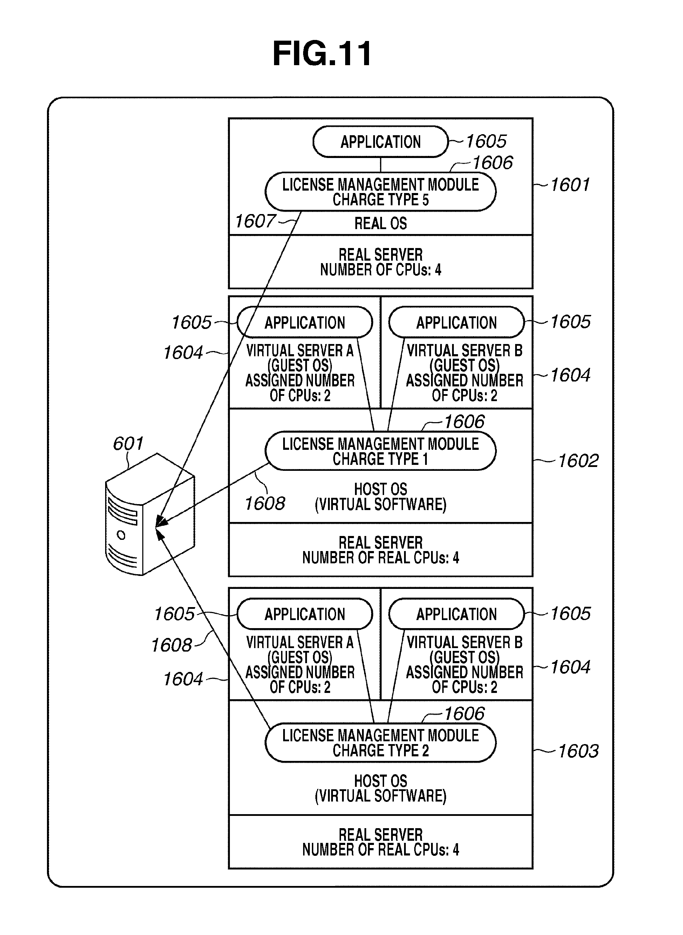

Fig. 11 illustrates an overall configuration of the license management system of a network system including both a real server and a virtual server.

A license management system according to a fourth exemplary embodiment includes a server 1601 operated by the real server as well as servers 1602 and 1603. Two virtual servers 1604 are operated on each of the servers 1602 and 1603.

Application 1605 is installed in the server 1601 and each of the virtual servers 1604. Unlike the first embodiment, a license management module 1606 that manages the licenses of the client server is arranged in both the server 1601 and virtual servers 1604.

According to the example illustrated in Fig. 11, the server 1601 corresponds to the first information processing apparatus and the servers 1602 and 1603 correspond to the second information processing apparatus. The system illustrated in Fig. 11 includes the server 1601 that does not operate virtualization software and servers 1602 and 1603 that operate virtualization software. The license management module 1606 operates on all servers 1601, 1602, and 1603.

Regarding the servers 1601, 1602, and 1603, the license management module 1606 determines whether the license type is based on the server (information processing apparatus) or on the virtual server unit. After the determination, the license management module 1606 requests a number of licenses according to the license type to the license server 601 and acquires the licenses.

If the license type is based on the server (information processing apparatus), the license management module 1606 requests the license server to send one license or a number of licenses corresponding to the number of CPUs. If the license type is based on the virtual server, the license management module 1606 requests the license server to send a number of licenses corresponding to the number of virtual servers 1604 that operate on the server 1602 or 1603. Further, if the license type is based on the virtual server, a count method similar to the one described referring to Fig. 7 can be used.

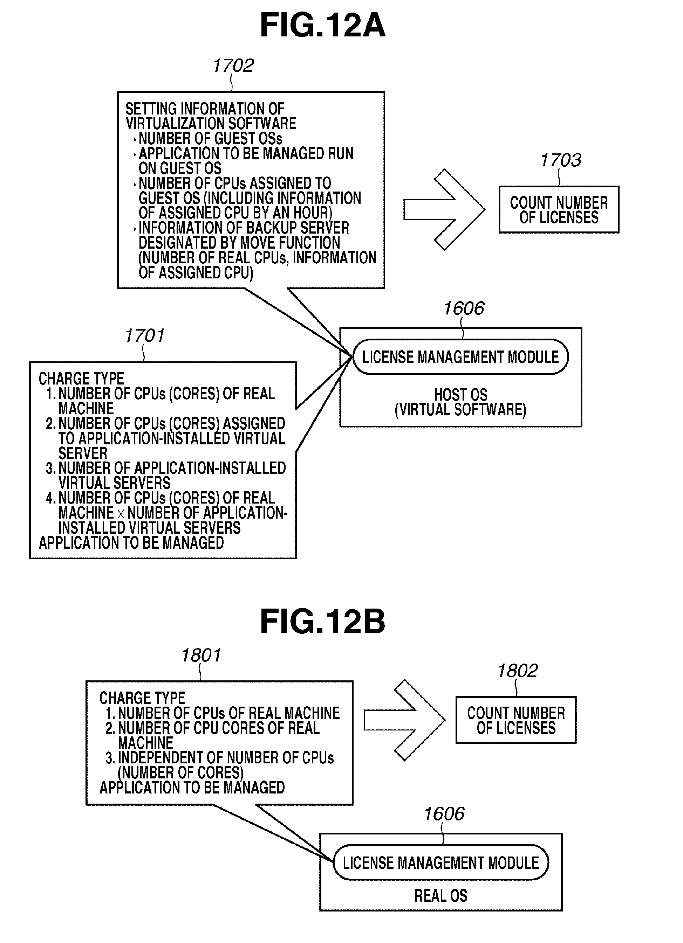

Fig. 12 illustrates information kept by the license management module on the virtual server and the real server.

On the virtual server, the license management module 1606 keeps information 1701 and 1702 illustrated in Fig. 12A. The information 1701 is set in advance in the license management module 1606 and includes information about license charge type of the application managed in the virtual environment and the application information managed by the license management module. The charge type of different servers, such as the servers 1602 and 1603, may be different.

Further, the information 1701 includes information about the number of real CPUs, the number of virtual servers, the number of CPUs assigned to each virtual server, and the presence/absence of a backup server via the virtualization software. The license count can be calculated from such information (1703).

The license management module 1606 keeps information, such as information 1801 illustrated in Fig. 12B, on the server 1601. The information 1801 is set in advance in the virtual environment license management module and it is information about the license charge type of the application managed in the virtual environment and application information managed by the license management module. The charge type may be based on the number of CPUs, the number of CPU cores, or a number not depending on the number of CPUs.

Since the license management module has information about the number of CPUs or the number of cores in advance, the number of licenses can be counted according to the charge type (1802). The license management module sends license count information to the license server that counts the license of the entire system, and inquires whether the license can be used (1607).

Similarly, the license management module counts the number of licenses of a server operating a virtual server, such as the server 1602 or 1603, sends the license count information to the license server that counts the license of the entire system, and inquires whether the license can be used (1608).

### Other Embodiments

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An information processing apparatus which acquires a license from a license server (601) and installs application software permitted by the license, the apparatus comprising:
a processor (802);
a virtual server (302, 402) which operates on the information processing apparatus by using the processor (802), wherein the application software is executable on the virtual server (302, 402);
determination means configured to determine a license type of the application software, wherein the determination means determines the license type according to a unit of the information processing apparatus or a unit of the virtual server;
transmission means configured to transmit the license type determined by the determination means to the license server (601); and
acquisition means configured to acquire a license used for executing the application software from the license server (601).

2. The information processing apparatus according to claim 1 further comprising:
count means configured to count a number of licenses corresponding to the license type,
wherein a plurality of the virtual servers can be operated on the information processing apparatus, and
wherein in the case that the determination means determines that the license type is in the unit of the virtual server, the determination means is configured to further determine a count type of the virtual server (302, 402), and the count means is configured to count the number of licenses corresponding to the count type.

3. The information processing apparatus according to claim 1 or claim 2, wherein the processor (802) is a multicore processor or a plurality of single core processors, and wherein a number of cores of the multicore processor or a number of single core processors is determined as a number of CPUs.

4. The information processing apparatus according to claim 3 when dependent on claim 2, wherein in the case that the determination means determines that the license type is based on the unit of the information processing apparatus, the count means is configured to count the number of CPUs as the number of licenses.

5. The information processing apparatus according to claim 3 when dependent on claim 2, wherein in the case that the determination means determines that the license type is based on the unit of the information processing apparatus, the count means is configured to count the number of licenses based on the number of virtual servers and the number of CPUs assigned to each virtual server (302, 402).

6. The information processing apparatus according to claim 3 when dependent on claim 2, wherein in the case that the determination means determines that the license type is based on the unit of the information processing apparatus, the count means is configured to count the number of virtual servers as the number of licenses.

7. The information processing apparatus according to claim 3 when dependent on claim 2, wherein in the case that the determination means determines that the license type is based on the unit of the information processing apparatus, the count means is configured to count the number of licenses by multiplying the number of virtual servers by the number of CPUs.

8. A license management system comprising:
a license server (601) configured to issue a license;
a first and a second information processing apparatuses connected to the license server (601) and acquiring a license from the license server (601) and installing application software permitted by the license via a communication medium,
wherein the first information processing apparatus includes:
a first processor, wherein the application software is executed by the first processor;
first transmission means configured to transmit a license request for the application software to the license server (601); and
first acquisition means configured to acquire a license used for executing the application software from the license server (601), and
wherein the second information processing apparatus includes:
a second processor;
a virtual server (302, 402) which operates on the second information processing apparatus using the second processor, wherein a plurality of the virtual servers can operate on the second information processing apparatus, and the application software can be executed on the virtual server (302, 402);
count means configured to count a number of licenses corresponding to the virtual server (302, 402);
second transmission means configured to transmit the number of licenses counted by the count means to the license server (601), and
second acquisition means configured to acquire a license used for executing the application software, from the license server (601),
wherein the license server (601) includes:
receiving means configured to receive the license request from the first transmission means or the number of licenses from the second transmission means, and
license issue means configured to issue a license corresponding to the license request or the number of licenses.

9. A control method for an information processing apparatus which acquires a license from a license server (601) and installs application software permitted by the license, the method comprising:
a processor (802);
a virtual server (302, 402) which operates on the information processing apparatus by using the processor (802), wherein the application software is executable on the virtual server (302, 402);
determining a license type of the application software, wherein the license type is determined according to a unit of the information processing apparatus or a unit of the virtual server (302, 402) unit;
transmitting the license type to the license server (601); and
acquiring a license used for executing the application software from the license server (601).

10. The control method of an information processing apparatus according to claim 9 further comprising:
counting a number of licenses corresponding to the license type,
wherein a plurality of the virtual servers can be operated on the information processing apparatus, and
determining a count type of the virtual server (302, 402), and counting the number of licenses corresponding to the count type if the license type is determined to be in the unit of the virtual server unit.

11. The control method of information processing apparatus according to claim 9 or claim 10, wherein the processor (802) is a multicore processor or a plurality of single core processors, and wherein the number of cores of the multicore processor or the number of single core processors is determined as a number of CPUs.

12. The control method of an information processing apparatus according to claim 11 when dependent on claim 10, wherein if the license type is determined based on the unit of the information processing apparatus, the number of CPUs is counted as the number of licenses.

13. A control method for a license management system, the license management system including:
a license server (601) configured to issue a license;
a first information processing apparatus connected to the license server (601), and configured to acquire a license from the license server (601), and to install application software permitted by the license via a communication medium, the first information processing apparatus comprising a first processor, wherein the application software is executed by the first processor;
a second information processing apparatus connected to the license server (601), and configured to acquire a license from the license server (601), and to install application software permitted by the license via a communication medium, the second information processing apparatus comprising:
a second processor;
a virtual server (302, 402) which operates on the second information processing apparatus using the second processor, wherein a plurality of the virtual servers can operate on the second information processing apparatus, and the application software can be executed on the virtual server (302, 402);
the method comprising:
a control method for the first information processing apparatus comprising the steps of:
first transmitting of a license request for the application software to the license server (601); and
first acquiring of a license used for executing the application software from the license server (601), and
a control method for the second information processing apparatus comprising the steps of;
counting a number of licenses corresponding to the virtual server (302, 402);
second transmitting for transmitting the number of licenses counted by the count unit to the license server (601), and
a second acquisition for acquiring a license used for executing the application software from the license server (601), and
and a control method for the license server (601) comprising the steps of:
receiving the license request from the first transmission unit or the number of licenses from the second transmission unit, and
issuing a license corresponding to the license request or the number of licenses.

14. A program which, when run on a device, causes the device to execute a method according to any one of claims 9 to 13.

15. A computer-readable storage medium storing a program according to claim 14.
